Europäisches Patentamt

European Patent Office

Office européen des brevets

(19)

(11) **EP 1 220 248 A1**

(12) ## DEMANDE DE BREVET EUROPEEN

(43) Date de publication:
**03.07.2002 Bulletin 2002/27**

(51) Int Cl.$^7$: **H01G 5/16**

(21) Numéro de dépôt: **01420223.8**

(22) Date de dépôt: **12.11.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **20.11.2000 FR 0014931**

(71) Demandeur: **Memscap
38330 Saint Ismier (FR)**

(72) Inventeurs:
• **Guillon, Bertrand
87000 Limoges (FR)**
• **Blondy, Pierre
87000 Limoges (FR)**

(74) Mandataire: **Palix, Stéphane et al
Cabinet Laurent et Charras
20, rue Louis Chirpaz
B.P. 32
69131 Ecully Cedex (FR)**

(54) **Microcomposant incluant un composant capacitif**

(57) Microcomposant incluant un composant capacitif, <u>caractérisé</u> en ce que le composant capacitif est constitué d'au moins deux condensateurs élémentaires $C_1$, $C_2$, $C_3$, $C_4$,) connectés en série, chaque condensateur élémentaire comportant deux armatures, à savoir :

• une armature fixe (10) par rapport au reste du microcomposant ;
• une seconde armature (12) dont une partie est apte à se déplacer par rapport à la première armature fixe (10) sous l'action d'un signal de commande, de manière à faire varier la valeur de la capacité du condensateur élémentaire $C_1$,

et en ce que les signaux de commande des différents condensateurs élémentaires sont générés indépendamment de manière à faire varier la capacité globale du condensateur par une variation indépendante des capacités de chaque condensateur élémentaire.

FIG.2

EP 1 220 248 A1

## Description

### Domaine technique

L'invention se rattache au domaine de la micro-électronique, et plus précisément au secteur de la fabrication des microcomposants, notamment destinés à être utilisés dans des applications radio ou hyper fréquence. Elle concerne plus particulièrement des microcomposants du type capacité variable réalisés selon une technologie connue sous l'abréviation MEMS, signifiant en anglais "micro-electro-mechanical-systems". Cette technologie permet sous l'action d'une force qui peut être d'origine électrostatique, thermique ou magnétique, de faire se déplacer des niveaux conducteurs les uns par rapport aux autres.

L'invention vise donc des microcomposants réalisés selon cette technologie, et qui présentent une valeur de capacité qui peut varier sur des plages beaucoup plus larges que les composants existants.

### Techniques antérieures

Il est déjà connu de réaliser des composants capacitifs intégrés dans des microcomposants, en utilisant la technologie MEMS précitée.

Ainsi, de tels microcondensateurs peuvent présenter des plaques conductrices, au regard l'une de l'autre, formant chacune une armature du condensateur.

Sous l'action d'une tension électrostatique exercée entre les plaques, il est possible de générer un déplacement d'une armature par rapport à l'autre, et donc une variation de la capacité. De telles capacités connues sous le terme générique de VARICAP MEMS sont par exemple décrites dans le document « A micromachined variable capacitor for monolithic low noise VCOs », Young D.J. and Boser B.E., Technical Digest Solid State Sensor and Actuator Workshop, pp 86-89.

On a également décrit notamment dans le document «High tuning ratio MEMS-based tunable capacitors for RF communications applications », Yao J., Park S., DeNatale J., Tech. Digest., Solid State Sensor and Actuator Workshop pp 124-127, 1998 des capacités variables dont les armatures sont mobiles l'une par rapport à l'autre selon une direction parallèle au plan des armatures.

On a également décrit notamment dans le document « Two phase Actuators : stable zipping devices without fabrication of curved structures », J.R. Gilbert, S.D. Senturia, Tech. Digest., Solid State Sensor and Actuator Workshop pp 98-100, 1996, une des capacités variables dont les deux armatures forment un angle entre elles.

Sous l'action d'une force extérieure, l'angle entre les deux armatures peut être modifié, et par conséquent la capacité du condensateur formé par ces deux armatures.

Ces différentes solutions présentent toutes l'inconvénient majeur de ne permettre la variation de la valeur de la capacité que sur une plage limitée.

Ainsi, dans certaines applications pour lesquelles il est nécessaire de faire varier la valeur de la capacité de façon importante, par exemple dans un circuit oscillant dont on veut régler la fréquence d'accord, de tels composants s'avèrent inappropriés.

Un premier problème que se propose de résoudre l'invention est celui de la faible variation de la capacité des condensateurs réalisés à partir de technologies MEMS.

Par ailleurs, on connaît d'autres types de condensateurs variables, tels que notamment décrits dans le document « RF MEMS tunable capacitors for tunable filters », Goldsmith C.L., Malczewski A., Yao Z.J., Chen S., Ehmke J., Hinzel D., International Journal on RF and Microwave Computer-Aided Engineering, 1999, pp 362-374.

Un tel condensateur est réalisé par l'association d'une pluralité de condensateurs élémentaires, présentant chacun une capacité déterminée. Ces différentes capacités sont associées par un ensemble de micro-interrupteurs autorisant leur mise en parallèle.

Ces micro-interrupteurs sont réalisés en technologie MEMS, et sont commandés dynamiquement pour assurer la mise en parallèle d'un certain nombre de condensateurs élémentaires.

Un tel condensateur global présente certains inconvénients. Tout d'abord le réglage de la valeur de la capacité du condensateur global ne peut se faire qu'à une précision correspondant à la valeur de capacité du plus petit des condensateurs élémentaires. Ce réglage de la valeur de capacité n'est donc pas continu, mais discret.

En outre, un tel condensateur présente une relativement forte résistance, puisqu'elle correspond aux résistances des condensateurs élémentaires réalisés en technologie traditionnelle, augmentée de celle des micro-interrupteurs.

Une telle résistance est un obstacle pour obtenir des performances satisfaisantes, et notamment dans les circuits radio-fréquence.

Un second problème que se propose de résoudre l'invention est celui de permettre un réglage continu, aussi précis que possible de la valeur d'une capacité variable.

### Exposé de l'invention

L'invention concerne donc un microcomposant incluant un composant capacitif. Ce microcomposant se caractérise en ce que le composant capacitif est constitué d'au moins deux condensateurs élémentaires connectés en série, chaque condensateur élémentaire comportant deux armatures, à savoir :

• une armature fixe par rapport au reste du microcomposant ;

- une seconde armature dont une partie est apte à se déplacer par rapport à la première armature fixe sous l'action d'un signal de commande, de manière à faire varier la valeur de la capacité du condensateur élémentaire.

Autrement dit, la capacité globale du condensateur, dont l'inverse est égal à la somme des inverses de la capacité de chaque condensateur élémentaire, peut être réglée en faisant varier la capacité de chaque condensateur élémentaire.

De façon préférée, il peut être possible de déplacer l'armature mobile d'un condensateur élémentaire de telle sorte que cette capacité soit particulièrement élevée et donc relativement négligeable dans le calcul de la capacité globale. Plus précisément, le mode de fonctionnement peut être tel que toutes les capacités sauf une sont commandées de telle sorte que les armatures sont particulièrement proches, et que la capacité de chaque condensateur élémentaire est extrêmement élevée.

Dans ce cas, la capacité globale est sensiblement égale à celle de la seule capacité commandée différemment.

Ainsi, lorsque les différents condensateurs élémentaires ont des plages de variation de leur capacité qui sont différentes, il est possible de donner au condensateur global la capacité voulue en choisissant le condensateur élémentaire dont la plage recouvre la valeur souhaitée, et de commander les autres condensateurs élémentaires de telle sorte que leur capacité soit très élevée, donc négligeable.

En choisissant des plages de variation avec un faible recouvrement, on optimise ainsi la plage de variation de la capacité globale.

Les architectures utilisées pour les condensateurs élémentaires peuvent être particulièrement variées. Ainsi, les armatures mobiles peuvent se déplacer par rapport à l'armature fixe selon des directions perpendiculaires ou parallèles au plan principal de l'armature fixe.

Dans un autre type de condensateur élémentaire, la seconde armature peut être apte à se déplacer par rapport à l'armature fixe par pivotement autour d'un axe parallèle à cette dernière.

Plusieurs technologies peuvent être employées pour réaliser des condensateurs élémentaires, et notamment les technologies par dépôt électrolytique de cuivre.

Dans une forme particulière de réalisation, les condensateurs élémentaires sont réalisés de telle sorte que l'armature mobile forme une arche enjambant l'armature fixe, l'arche possédant une partie centrale déformable apte à se rapprocher de l'armature fixe sous l'action du signal de commande.

Autrement dit, l'armature mobile forme un pont qui enjambe la piste formant une armature fixe. Les surfaces en regard de ce pont et de l'armature fixe constituent le condensateur élémentaire. Du fait de la flexibilité de ce pont, il est possible de faire varier la distance séparant l'armature fixe et le pont, de sorte que la capacité de ce condensateur élémentaire varie.

Cette déformation de l'arche peut être obtenue de différentes manières, et par exemple par l'application d'une tension de polarisation continue entre l'armature fixe et l'armature mobile.

En pratique, la déformation du pont permet de faire varier la capacité du condensateur élémentaire entre une valeur haute et une valeur basse.

En pratique, la géométrie de chaque condensateur élémentaire, est telle que le rapport entre ces valeurs extrêmes de capacité est supérieur à deux, et préférentiellement à cinq. Dans ces conditions, la capacité maximale est relativement importante, et elle est suffisamment négligeable vis à vis des capacités des autres condensateurs élémentaires pour avoir une influence minime sur le calcul de la capacité globale.

Dans une forme avantageuse, au moins un condensateur élémentaire possède une armature mobile qui est apte à venir au contact de l'armature fixe, et ainsi fonctionner comme un interrupteur avec une capacité assimilable à l'infini, sans influence sur les autres condensateurs élémentaires.

## Description sommaire des figures

La manière de réaliser l'invention ainsi que les avantages qui en découlent ressortiront bien de la description du mode de réalisation qui suit, à l'appui des figures annexées, dans lesquelles :

La figure 1 est une vue en perspective sommaire d'une partie d'un microcomposant conforme à l'invention, dans la zone incluant plusieurs condensateurs élémentaires.

La figure 2 est une vue de dessus du microcomposant, dans sa zone incluant plusieurs condensateurs élémentaires.

La figure 3 est une vue en coupe selon le plan III-III' de la figure 2.

La figure 4 est un schéma équivalent de la structure illustrée à la figure 2.

La figure 5 est un diagramme montrant l'évolution de la capacité globale en fonction des différentes commandes des condensateurs élémentaires.

## Manière de réaliser l'invention

Comme déjà évoqué, l'invention concerne un microcomposant qui inclut un condensateur constitué d'une pluralité de condensateurs élémentaires mis en série, chacun de ces condensateurs élémentaires présentent une capacité variable, grâce à la possibilité de faire varier la distance entre leurs armatures.

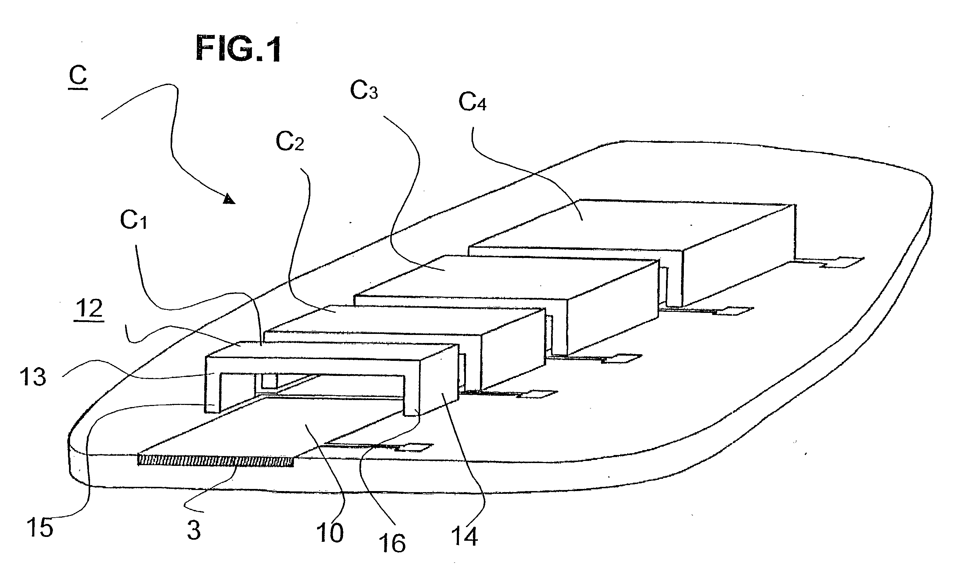

Plus précisément, et comme illustré dans l'exemple de la figure 1, le condensateur global est constitué de l'association en série de quatre condensateurs élémentaires $C_1$, $C_2$, $C_3$, $C_4$. Bien évidemment, l'invention couvre également les variantes incluant un nombre inférieur ou supérieur de condensateurs élémentaires.

Comme illustré à la figure 1, chaque condensateur élémentaire $C_1$ - $C_4$ possède une armature fixe (10), qui est constituée par une piste métallique insérée dans un canal (3) prévu à cet effet dans le substrat (2).

Cette armature fixe (10) peut être réalisée selon différents procédés, et par exemple un procédé de dépôt électrolytique de cuivre.

Par ailleurs, chaque condensateur élémentaire $C_1$ - $C_4$ comporte une armature mobile (12) qui est constituée dans l'exemple de la figure 1 par un pont enjambant l'armature fixe (10). Plus précisément, cette armature mobile (12) comporte deux segments latéraux (13, 14) qui sont perpendiculaires au plan principal du substrat (2). Ces deux segments latéraux (13, 14) possèdent leurs extrémités basses (5, 6) insérées à l'intérieur d'un canal (7, 8) prévu à cet effet dans le substrat (2). L'armature mobile (12) comporte également un segment central (19) reliant les segments latéraux (13, 14). Ce segment central (19) possède une face (21) en regard avec l'armature fixe (10). Ces zones en regard forment donc le condensateur élémentaire $C_1$ proprement dit.

La valeur de la capacité du condensateur est déterminée par :

- la distance (d) séparant la face (21) du segment central (19) de l'armature mobile (12) et l'armature fixe (10):

  - le type de matériaux présents entre l'armature fixe (10) et l'armature mobile (12);
  - la superficie des zones en regard sur l'armature fixe (10) et l'armature mobile (12).

Concernant le type de matériau utilisé, celui-ci dépend de la technologie mise en oeuvre pour la réalisation des armatures. Ainsi, le matériau présent entre les deux armatures peut être de l'air, ou un gaz inerte, ou bien encore de l'air associé à une couche d'isolant empêchant le contact entre l'armature mobile (12) et l'armature fixe (10).

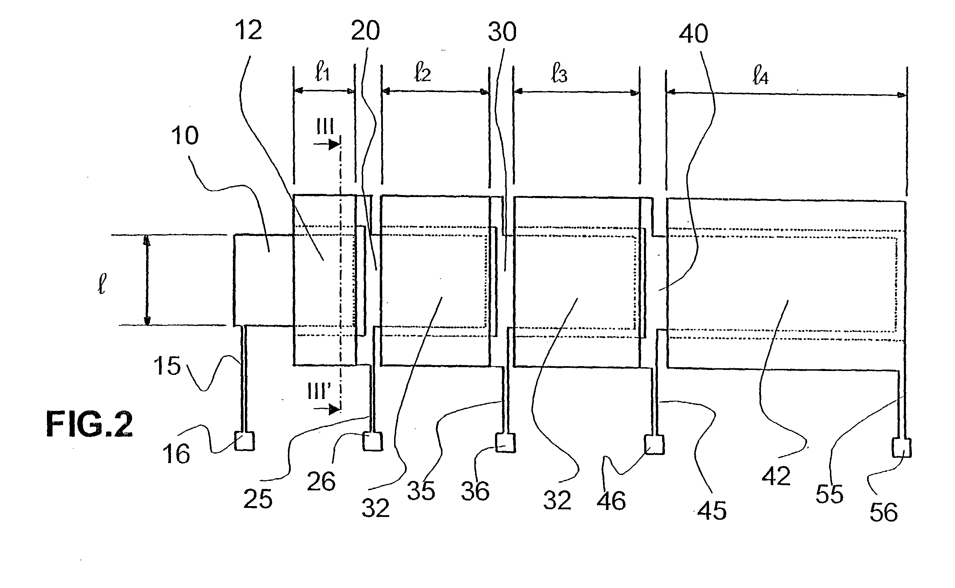

La superficie en regard entre les deux armatures correspond sensiblement aux produits de la largeur $\ell$ de l'armature fixe (10), par la largeur $\ell_1$, $\ell_2$, $\ell_3$, $\ell_4$ du pont formant l'armature mobile (12, 22, 32, 42) de chaque condensateur élémentaire. Comme on le voit à la figure 2, ces largeurs $\ell_1$, $\ell_2$, $\ell_3$, $\ell_4$ peuvent être variables d'un condensateur élémentaire à l'autre pour que les valeurs des capacités de chacun de ces condensateurs élémentaires soient différentes.

Conformément à l'invention, la distance (d) entre l'armature fixe et l'armature mobile est variable selon l'application d'un signal de commande. Plus précisément, l'armature mobile (12) présente une flexibilité, ou une possibilité de se déformer de telle sorte que le segment central (19) de l'armature mobile (12) peut se rapprocher ou s'éloigner de l'armature fixe (10).

Plusieurs mécanismes d'actuation peuvent être employés, et l'invention n'est pas limitée à la seule forme de réalisation de la figure 1, dans laquelle le déplacement du segment central (19) de l'armature mobile est obtenu par l'application d'une tension de polarisation continue ou quasi continue entre les armatures mobiles (12) et les armatures fixes (10).

A cet effet, les différentes armatures sont reliées à des bornes de connexion permettant l'application des signaux de commande. Plus précisément, et comme illustré à la figure 2, chaque armature fixe (10, 20, 30, 40) est reliée à une piste transversale (15, 25, 35, 45) reliée à un plot (16, 26, 36, 46) d'application du signal de commande.

Pour assurer la mise en série des condensateurs élémentaires, chaque armature mobile (12, 22, 32, 42) est reliée par ses deux segments latéraux (13, 14), à l'armature fixe (20, 30, 40) du condensateur adjacent. Ainsi, chaque arche formant l'armature mobile d'un condensateur élémentaire se prolonge vers le condensateur élémentaire adjacent en formant l'armature fixe de ce dernier. L'armature mobile (42) du condensateur élémentaire $C_4$ constitue une borne du condensateur global, et est reliée à un plot (56) via une piste (55).

De la sorte, l'application d'une tension continue entre l'armature fixe (10, 20, 30, 40) d'un condensateur et l'armature fixe (20, 30, 40) du condensateur adjacent, (donc l'armature mobile du condensateur considéré), crée un champ électrostatique entre l'armature mobile (12) et l'armature fixe (10) d'un condensateur élémentaire.

Ce champ électrostatique engendre une force électrostatique qui, du fait de la flexibilité de l'arche (19) de l'armature mobile (12), en provoque la déformation. Plus précisément, on observe le rapprochement ou l'éloignement du segment central (19) de l'armature mobile (12) vers l'armature fixe (10), en fonction du signe de la tension appliquée.

La capacité de chaque condensateur élémentaire $C_1$, peut donc varier entre une valeur minimale $C_{min}$, correspondant à l'éloignement maximal de l'armature mobile (12) et l'armature fixe (10), et une valeur maximale $C_M$ pour laquelle l'armature mobile (12) est le plus près possible de l'armature fixe (10). Entre ces deux valeurs, il existe une valeur de capacité $C_{max}$ correspondant à la valeur limite de capacité que l'on peut atteindre en conservant le contrôle du déplacement de l'arche.

En fonction des technologies utilisées, des matériaux employés et de la géométrie des armatures mobiles, la valeur maximale $C_M$ peut être au moins de cinq à six fois la valeur minimale $C_{min}$. Dans certaines technologies l'armature mobile (12) peut venir jusqu'au contact de l'armature fixe (10), ou de la couche d'isolant qui la recouvre, de sorte que la capacité atteint une valeur très élevée.

Typiquement, avec un condensateur élémentaire de dimensions suivantes :

- largeur $\ell$ de l'armature fixe (10) de 420 micromètres ;
- largeur $\ell_1$ du pont formant l'armature mobile de 90 à 200 micromètres ;
- distance (d) séparant les armatures fixes et mobiles de 2 à 6 micromètres ; on obtient une capacité au repos ($C_{min}$) de l'ordre de 0,1 picoFarad.

Cette capacité peut être contrôlée jusqu'à une valeur $C_{MAX}$ de 0,13 picoFarad, par l'application d'une tension de polarisation appropriée. L'application d'une tension plus élevée provoque une déformation du pont telle que la capacité atteint une valeur $C_M$ d'un picoFarad, de sorte que l'influence de ce microcondensateur dans le condensateur global devient presque négligeable.

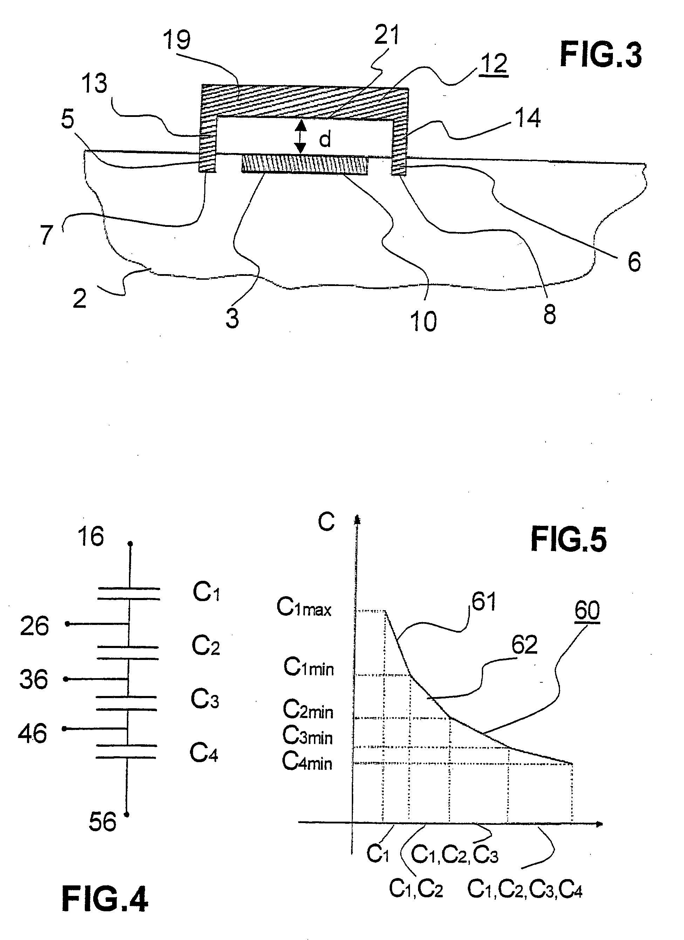

On a représenté en figure 4 un schéma équivalent de la configuration illustrée aux figures 1 et 2.

Les différents condensateurs C1, C2, C3, C4 ont une capacité variable, sur des plages différentes, typiquement entre quelques femtoFarads et 1 picoFarad

La figure 5 illustre le fonctionnement de l'invention, en montrant la plage de capacité qui peut être atteinte par la détermination de signaux de commande appropriés.

Ainsi, lorsque les capacités C2, C3, C4 sont commandées de telle sorte que leur armature mobile (22, 32, 42) est très proche de leur armature fixe (20, 30, 40), seul le condensateur global C correspond sensiblement au condensateur C1. La capacité du condensateur C1 peut être accordée entre deux valeurs C1min et C1max, correspond aux positions dans laquelle son armature mobile est respectivement éloignée ou proche de l'armature fixe.

La valeur de capacité du condensateur global varie donc sur la plage illustrée par le segment (61) de la courbe (60).

Si on actionne maintenant le condensateur C2 de façon différente, c'est-à-dire si la tension appliquée entre les bornes (26) et (36) diminue, le condensateur élémentaire C2 intervient alors à part entière dans le condensateur global. La capacité globale de ce condensateur vaut donc : $\dfrac{C_1 \cdot C_2}{C_1 + C_2}$

Cette capacité globale peut alors être commandée de manière continue entre deux valeurs, la première valeur étant choisie égale à $C_{1min}$, et une seconde valeur appelée $C_{2min}$.

De la sorte, la capacité globale peut varier entre les valeurs $C_{1max}$ et $C_{2min}$, correspondant aux segments 61 et 62 de la courbe (60) de la figure 5.

La démarche se généralise à un nombre supérieur de condensateurs élémentaires, par l'actionnement approprié du condensateur C3, puis du condensateur C4.

De façon pratique, on obtient ainsi une variation de la capacité du condensateur global, mesurée entre les bornes (16) et (56) qui est nettement supérieure à la variation que l'on peut obtenir avec un seul condensateur variable réalisé en technologie MEMS.

Bien que l'invention soit décrite en détail dans un système d'actuation par tension de polarisation et de forces électrostatiques, elle couvre également d'autres variantes dans lesquelles la force d'application permettant de mettre en mouvement l'armature mobile par rapport à l'armature fixe est obtenue par un phénomène thermique, magnétique ou autre.

Par ailleurs, l'invention est également décrite en utilisant une technologie dans laquelle les armatures sont réalisées à partir d'un matériau conducteur tel que du cuivre, mais elle couvre également les variantes dans lesquelles les armatures sont réalisées en un autre métal, ou bien encore en un matériau semi-conducteur.

Ces microcomposants peuvent être réalisés pour former des condensateurs à part entière, indépendamment d'un circuit intégré. Le substrat utilisé peut alors être soit une couche de quartz, de silicium ou d'arseniure de gallium. Le microcomposant peut également être réalisé sur un circuit intégré pré-existant.

Il ressort de ce qui précède que les microcomposants capacitifs réalisés conformément à l'invention possèdent une plage de variation continue d'une très grande amplitude, comparé avec les microcomposants similaires réalisés en technologie MEMS.

## Revendications

1. Microcomposant incluant un composant capacitif, **caractérisé en ce que** le composant capacitif est constitué d'au moins deux condensateurs élémentaires ($C_1$, $C_2$, $C_3$, $C_4$) connectés en série, chaque condensateur élémentaire comportant deux armatures, à savoir :

   - une armature fixe (10) par rapport au reste du microcomposant ;
   - une seconde armature (12) dont une partie (19) est apte à se déplacer par rapport à la première armature fixe (10) sous l'action d'un signal de commande, de manière à faire varier la valeur de la capacité du condensateur élémentaire $C_1$,

   et **en ce que** les signaux de commande des différents condensateurs élémentaires sont générés indépendamment de manière à faire varier la capacité globale du condensateur par une variation indépendante des capacités de chaque condensateur élémentaire.

**2.** Microcomposant selon la revendication 1, **caractérisé en ce que** la seconde armature (12) d'au moins un condensateur élémentaire $C_1$ est apte à se déplacer par rapport à l'armature fixe (10) selon une direction perpendiculaire au plan principal de cette dernière.

**3.** Microcomposant selon la revendication 1, **caractérisé en ce que** la seconde armature d'au moins un condensateur élémentaire est apte à se déplacer par rapport à l'armature fixe selon une direction parallèle au plan principal de cette dernière.

**4.** Microcomposant selon la revendication 1, **caractérisé en ce que** la seconde armature d'au moins un condensateur élémentaire est apte à se déplacer par rapport à l'armature fixe par pivotement autour d'un axe parallèle à cette dernière.

**5.** Microcomposant selon les revendications 1 et 2, **caractérisé en ce que** l'armature mobile (12) forme une arche enjambant l'armature fixe (10), ladite arche possédant une partie centrale (19) déformable apte à se rapprocher de l'armature fixe sous l'action du signal de commande.

**6.** Microcomposant selon la revendication 5, **caractérisé en ce que** le signal de commande est une tension de polarisation appliquée entre l'armature fixe (10) et l'armature mobile (12).

**7.** Microcomposant selon la revendication 1, **caractérisé en ce que** la capacité de chaque condensateur élémentaire peut varier entre deux valeurs $C_{MIN}$, $C_M$ dont le rapport est supérieur à deux,

**8.** Microcomposant selon la revendication 1, **caractérisé en ce que** la capacité de chaque condensateur élémentaire peut varier entre deux valeurs $C_{MIN}$, $C_M$ dont le rapport est supérieur à cinq.

**9.** Microcomposant selon la revendication 1, **caractérisé en ce que** les condensateurs élémentaires $C_1$, $C_2$, $C_3$, $C_4$ ont des plages de variation de leur capacité qui sont différentes.

**10.** Microcomposant selon la revendication 1, **caractérisé en ce que** pour au moins un condensateur élémentaire, l'armature mobile est apte à venir au contact de l'armature fixe.

# FIG.1

C  C₁  C₂  C₃  C₄  12  13  15  3  10  16  14

EP 1 220 248 A1

FIG.2

**FIG.3**

**FIG.4**

**FIG.5**

**Office européen des brevets**

# RAPPORT DE RECHERCHE EUROPEENNE

Numéro de la demande

EP 01 42 0223

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN<br>vol. 1997, no. 11,<br>28 novembre 1997 (1997-11-28)<br>-& JP 09 199376 A (MURATA MFG CO LTD),<br>31 juillet 1997 (1997-07-31)<br>* abrégé * | 1-10 | H01G5/16 |
| A | PATENT ABSTRACTS OF JAPAN<br>vol. 1998, no. 12,<br>31 octobre 1998 (1998-10-31)<br>-& JP 10 189393 A (MURATA MFG CO LTD),<br>21 juillet 1998 (1998-07-21)<br>* abrégé * | 2,4,5 | |

**DOMAINES TECHNIQUES RECHERCHES (Int.Cl.7)**

H01G

Le présent rapport a été établi pour toutes les revendications

| Lieu de la recherche | Date d'achèvement de la recherche | Examinateur |
|---|---|---|
| LA HAYE | 3 mai 2002 | Goossens, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 42 0223

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

03–05–2002

| Document brevet cité au rapport de recherche | Date de publication | Membre(s) de la famille de brevet(s) | Date de publication |
|---|---|---|---|
| JP 09199376 A | 31–07–1997 | AUCUN | |
| JP 10189393 A | 21–07–1998 | AUCUN | |

EPO FORM P0460

Pour tout renseignement concernant cette annexe : voir Journal Officiel de l'Office européen des brevets, No.12/82